# EUROPEAN PATENT SPECIFICATION

(11) **EP 4 050 243 B1**
(45) Date of publication and mention of the grant of the patent: **04.11.2026**
(21) Application number: 22159016.9
(22) Date of filing: 25.02.2022
(51) Int. Cl.: F16J 15/16, F16J 15/34, B60B 27/00, B60K 7/00, F16J 15/3264, F16J 15/3252, F16J 15/3256, F16J 15/3268, F16C 33/78, F16J 15/3232, F16C 33/72, F16C 19/18

(54) **SEAL ASSEMBLY FOR A VEHICLE MOTORIZED WHEEL**
DICHTUNGSANORDNUNG FÜR EIN MOTORISIERTES RAD EINES KRAFTFAHRZEUGS
ENSEMBLE D'ÉTANCHÉITÉ DESTINÉ À UNE ROUE MOTORISÉE DE VÉHICULE

(30) Priority: 26.02.2021 IT 202100004538
(43) Date of publication of application: 31.08.2022
(73) Proprietor: Freudenberg Sealing Technologies S.A.S. Di Externa Italia S.r.l.u., 10064 Pinerolo (TO) (IT)
(72) Inventor: BREUSA, Luca, 10064 PINEROLO (TO) (IT); CUCCO, Giorgio, 10064 PINEROLO (TO) (IT); ANGIULLI, Pasquale, 10064 PINEROLO (TO) (IT)
(74) Representative: Studio Torta S.p.A.

(56) References cited:
- EP-A1- 1 890 057
- EP-A1- 2 913 565
- JP-A- 2018 035 835

## Description

### CROSS-REFERENCE TO RELATED APPLICATIONS

This Patent Application claims priority from Italian Patent Application No. 102021000004538 filed on February 26, 2021.

### TECHNICAL FIELD

The present invention relates to a seal assembly configured to prevent/limit the entry of external contaminants into a motor compartment of a vehicle motorized wheel.

### BACKGROUND ART

In recent years, developments in electric drive systems have made it possible to propose electric motors that can be directly integrated into the wheels of on-road or off-road vehicles. Such motors, commonly known as in-wheel electric motors generally comprise a stator, for example consisting of a plurality of coils and attached to a vehicle chassis, and a rotor, for example consisting of a series of magnets arranged around the stator and attached to the rotor part of the motorized wheel.

These motors may be, for example, of the electromagnetic induction, permanent magnet, synchronous ring, switched reluctance, etc. type.

A problem associated with the use of motors integrated into vehicle wheels is limiting/preventing the entry of external contaminants into the wheel compartments housing the aforesaid motors.

Such a problem can be solved by adopting suitable seal assemblies that can provide a barrier to the possible penetration of external contaminants, such as splashes, mud, water, into the in-wheel electric motors.

Another problem is to make seal assemblies that can ensure a long service life and do not cause excessive friction and consequent dissipation of the power generated by the in-wheel electric motors.

A seal assembly is known from Patent EP-B1-2058563 to the same Applicant that is configured to be housed in the compartment defined between a hollow casing and a rotating member, such as a shaft of a vehicle coaxially housed in the casing. This seal assembly is used between two environments, one of which is intended to accommodate a lubricating oil bath, and the other where oil must be prevented from entering and which is intended to accommodate air.

The seal assembly shown in Patent EP-B-2058563 essentially comprises a first support ring made of a rigid material that can be attached to the casing, a second support ring made of a rigid material, arranged radially innermost with respect to the first support ring and coupled to the rotating member to rotate in use together with the latter, and an annular gasket made of elastically deformable material, interposed between the first and the second support ring and comprising an anchor portion, carried by the first fixed support ring, and a first and a second annular sealing lip, protruding cantilevered from the anchor portion and cooperating in use respectively with a radial portion and with an axial portion of the second rotatable support ring.

In particular, the first sealing lip is configured to generate, with its own free end portion, a constant diffuse contact, i.e. in any conditions of use, over a large area of the radial portion of the second rotating support ring. More precisely, the aforesaid free end portion of the first sealing lip has a spiral groove configured to generate, during the rotation of the rotating member, a fluid-dynamic pumping action aimed at moving the oil away from the sealing area and towards the oil bath environment. The fluid-dynamic pumping action is achieved by generating a flow of air from the air environment to the oil-containing environment via the groove in the first sealing lip and by the rotation of the rotating member.

The second sealing lip is available in an oil-tight contact configuration with the axial portion of the second support ring when the rotating member is stationary, and can be detached from said axial portion due to the fluid-dynamic pumping effect generated by the groove of the first sealing lip on the air inside the groove when the rotating member is rotating.

The known described solution, although functionally effective in separating two environments from one another, one containing air and the other containing oil, of a casing housing a rotating member, is not suitable for the new requirement and in particular does not solve any of the problems indicated above in relation to the design of a seal assembly for a vehicle motorized wheel.

EP2913565A1 and EP1890057A1 disclose similar seal assemblies. JP2018035835A discloses the use of a seal assembly as described in the preamble of claim 1.

### DISCLOSURE OF INVENTION

Aim of the present invention is therefore to make a seal assembly configured to prevent/limit the entry of external contaminants into a motor compartment of a vehicle motorised wheel, which enables the above-specified problems to be overcome in a simple and cost-effective manner.

The aforesaid aim is achieved by the present invention, in that it relates to a seal assembly configured to prevent/limit the entry of external contaminants into a motor compartment of a vehicle motorized wheel, as defined in claim 1 and dependent claims thereof.

### BRIEF DESCRIPTION OF THE DRAWINGS

In order to better understand the present invention a preferred embodiment is described hereinafter, by way of a non-limiting example with reference to the accompanying drawings, wherein:
- Figure 1 shows, in a side view and with parts removed for clarity, a portion of a vehicle having a motorized wheel provided with an internal electric motor;
- Figure 2 is an enlarged scale section of the motorized wheel of Figure 1 according to line II-II of the same figure;
- Figure 3 is an enlarged scale axial semi-section of a seal assembly according to the present invention configured to prevent/limit the entry of external contaminants into the motorized wheel compartment of Figures 1 and 2 housing the electric motor;
- Figure 4 is a Figure similar to Figure 3, on a further enlarged scale, showing a gasket of the seal assembly according to the invention in an undeformed condition prior to assembly; and
- Figure 5 is a Figure similar to Figure 3, showing the seal assembly according to the invention in a different operating condition.

### BEST MODE FOR CARRYING OUT THE INVENTION

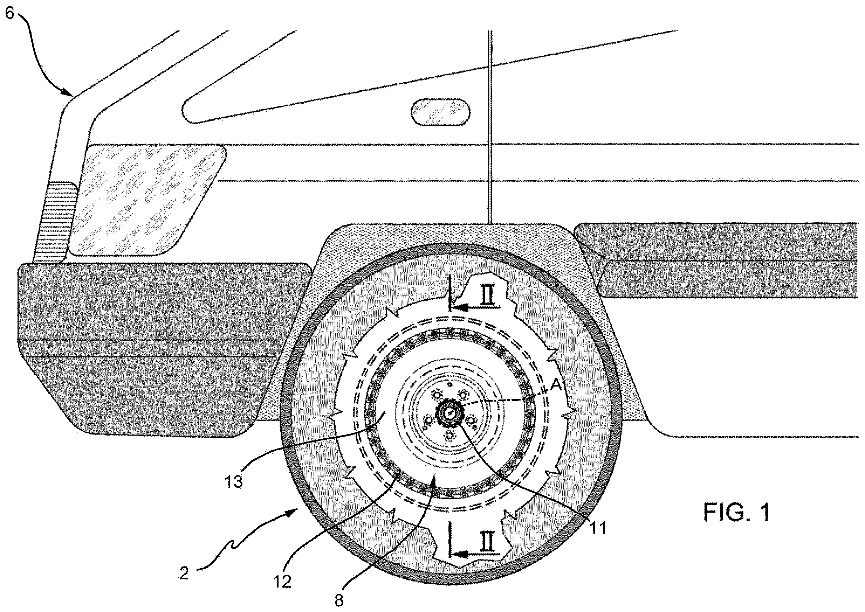

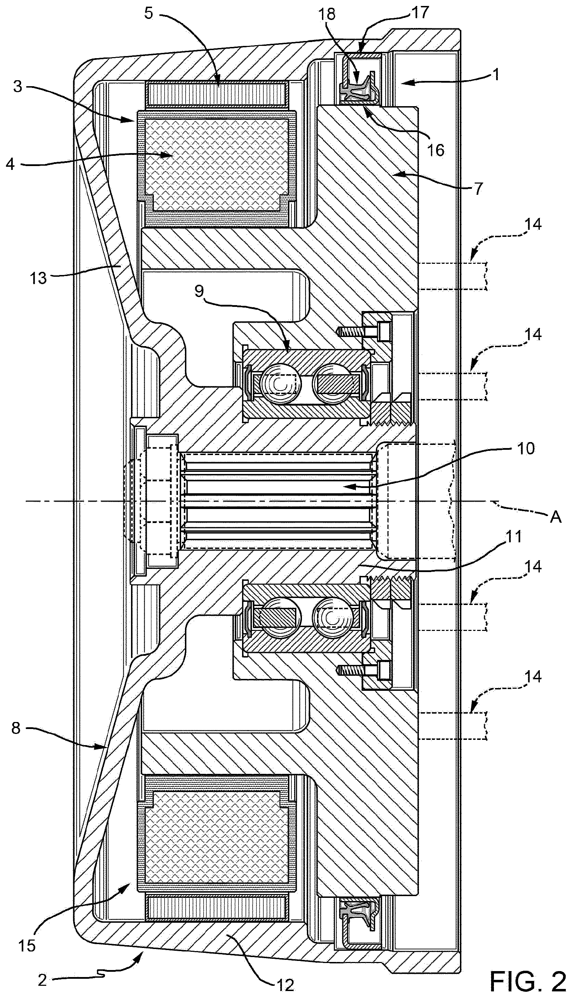

Referring to Figures 1 and 2, 1 denotes as a whole a seal assembly configured to limit/prevent the entry of external contaminants into a motorized wheel 2 housing an inner electric motor 3, commonly known as an in-wheel electric motor, for example an electromagnetic induction motor, a permanent magnet motor, a synchronous ring motor, a switched reluctance motor, etc., i.e. a motor having a stator 4 and a rotor 5.

The motorized wheel 2 may be used on any type of vehicle, in particular on a motor vehicle or on other types of on-road or off-road vehicles, an example of which is shown in Figure 1 and is collectively denoted by 6.

In particular, the motorized wheel 2 has an axis A and comprises a stator portion 7, fixed to the vehicle chassis 6 by means of connecting elements 14 (illustrated schematically in Figure 2 in a dotted line) and therefore fixed, and a rotor portion 8, supported in a rotatable manner around the axis A by the stator portion 7 by means of one or more bearings 9.

In the case shown, the stator portion 7 has an annular shape defining a through hole 10 of axis A intended to receive, with the interposition of the bearing 9, a hub 11 of the rotor portion 8.

More particularly, the rotor part 8 comprises, in addition to the hub 11, an annular crown 12 and a disc-shaped wall 13 connecting the respective corresponding axial ends of the hub 11 and the crown 12.

As visible in Figure 2, the stator portion 7 of the motorized wheel 2 is mounted in the annular space enclosed between the hub 11 and the crown 12 in a position facing the disc-shaped wall 13.

The stator portion 7 delimits with the crown 12 and with a portion of the disc-shaped wall 13 adjacent to the crown 12 itself an annular compartment 15, wherein the electric motor 3 is housed in use. In more detail, the rotor 5 of the electric motor 3 is cantilevered by the crown 12 of the rotor portion 8 of the motorized wheel 2; the stator 4 of the electric motor 3 is instead carried by the stator part 7 in a radial position facing the rotor 5.

Between the radially outer peripheral edge of the stator portion 7 and the crown 12 the seal assembly 1 according to the present invention is interposed to prevent/limit the entry into the compartment 15 of external contaminants (e.g. water, splashes, dust, pollutants, etc.) that could damage or impair the operation of the electric motor 3 during the vehicle operation 6.

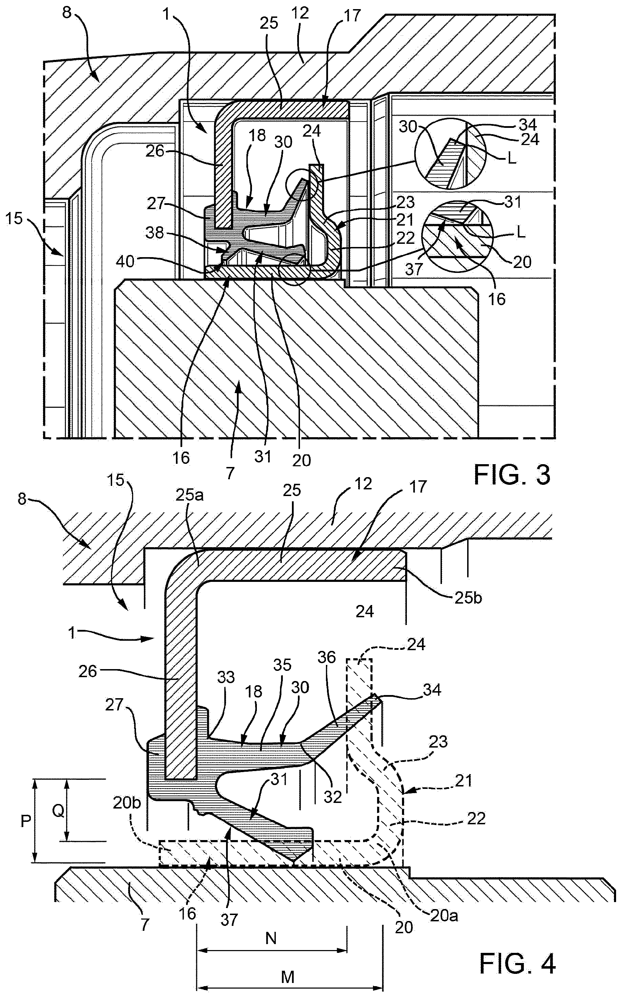

With reference to Figures 3 to 5, the seal assembly 1 has an axis coincident in use with the axis A of the motorized wheel 2 on which it is mounted and comprises:
- a first radially inner support ring 16 made of a rigid material fixed in use to the radially outer peripheral edge of the stator portion 7 of the motorized wheel 2;
- a second radially outer support ring 17, made of a rigid material, rotatable in use about the axis A with respect to the support ring 16 and jointly with the rotor portion 8 of the driven wheel 2; and
- an annular gasket 18 made of an elastically deformable material, interposed between the support rings 16 and 17 and preferably consisting of a single element.

The support ring 16 comprises an axial portion 20, extending parallel to the axis A and fixed in use to the radially outer peripheral edge of the stator portion 7 of the motorized wheel 2, and an approximately radial shaped portion 21, which extends cantilevered from an end 20a of the axial portion 20 opposite to the end 20b facing the compartment 15.

In particular, the shaped portion 21 comprises, starting from the axial portion 20, a first radial portion 22 connected to the end 20a, a conical portion 23 having sections increasing towards the compartment 15, and a second radial portion 24, arranged in an axial position offset towards the compartment 15 with respect to the radial portion 21.

The radial portion 24 defines the free end part of the shaped portion 21 and is connected to the radial portion 22 by the conical portion 23.

Similarly to the support ring 16, the support ring 17 comprises an axial portion 25, extending parallel to the axis A in a position facing the axial portion 20 of the support ring 16 and fixed in use to the radially inner surface of the crown 8 of the rotor part 7 of the motorized wheel 2, and a radial portion 26, extending radially cantilevered from the axial portion 25 in a position facing the shaped portion 21 and towards the axial portion 20 of the support ring 16 itself.

In more detail, the axial portion 25 has opposite ends 25a and 25b, the first of which is adjacent to the compartment 15. The radial portion 26 extends cantilevered from the end 25a towards the end 20b of the axial portion 20 and delimiting with the latter a predefined radial gap. The radial portion 26 is connected to the end 25a of the axial portion 25.

In practice, the shaped portion 21 of the support ring 16, and therefore the radial portions 22 and 24, as well as the radial portion 26 of the support ring 17 are arranged in a position interposed between the axial portions 20 and 25.

Furthermore, the axial portion 25 of the support ring 17 is radially disposed outermost of the axial portion 20 of the support ring 16.

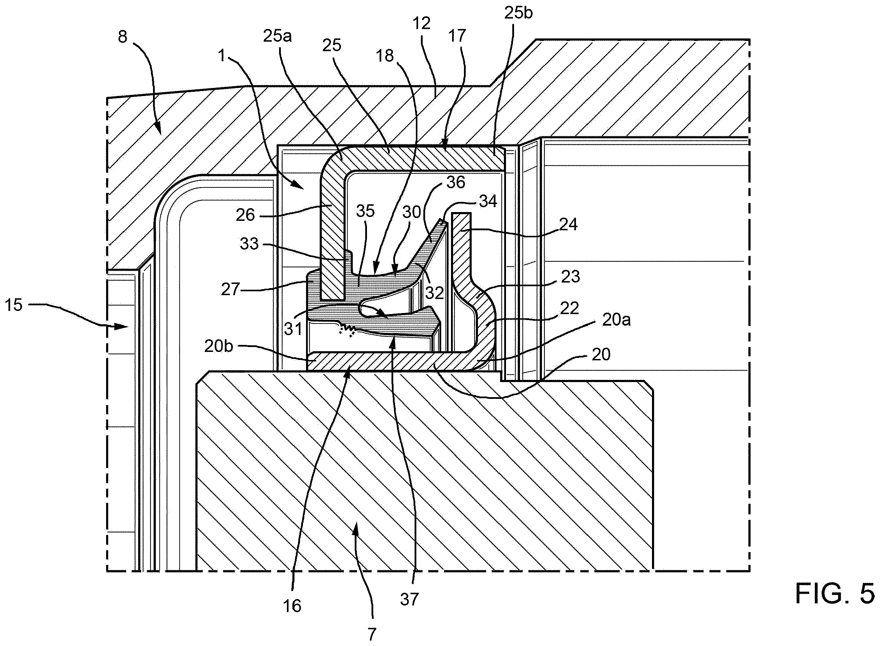

Advantageously, the gasket 18 comprises an anchor portion 27, externally attached to a free end section of the radial portion 26 of the support ring 17, and at least one first and one second annular sealing lip 30, 31, projecting cantilevered from the anchor portion 27, mounted by interference between the support rings 16, 17 and defining a sealing configuration (Figure 3), wherein they cooperate in contact with the radial portion 24 and with the axial portion 20, respectively, of the support ring 16 along respective annular contact lines L so as to be elastically preloaded, without the aid of external actions or external components, against the support ring 16 itself; the sealing lips 30, 31 are, moreover, set by centrifugal effect in a detaching configuration (Figure 5) from the radial portion 24 and from the axial portion 20 of the support ring 16, respectively, at speeds of the motorized wheel 2 greater than a predetermined non-zero value V, for example, in the case shown, between 800 rpm and 1,000 rpm.

The speed value V of the motorized wheel 2 at which the elastic preload of the sealing lips 30, 31 on the support ring 16 is cancelled depends on:
- diameter of the seal assembly 1;
- level of protection required, which in turn depends on the type of vehicle 6;
- speed ranges considered;
- dimensional preload of the sealing lips 30, 31, which in turn depends on the dimensional interferences of the sealing lips 30, 31 themselves in undeformed conditions with the support rings 16, 17;
- length of the sealing lips 30, 31;
- thickness of the sealing lips 30, 31.

The sealing lip 30 has an intermediate fold 32 between its own end 33 connected to the anchor portion 27 and its own opposite end 34 cooperating in contact in use with the radial portion 26 of the support ring 16 in the sealing configuration.

More specifically, the sealing lip 30 comprises a base portion 35, extending between the end 33, connected to the anchor portion 27, and the fold 32, and an oblique portion 36 extending between the fold 32 itself and the free end 34; the oblique portion 36 of the sealing lip 30 forms an acute angle with the radial portion 24 of the support ring 16 on the side facing the axial portion 20.

The base portion 35 of the sealing lip 30 has a substantially parallel course with the axis A.

The base portion 35 of the sealing lip 30 also has a tapered section towards its free end 34.

The sealing lip 31 extends from the anchor portion 27 of the gasket 18, in a position radially interposed between the sealing lip 30 and the axial portion 20 of the support ring 16 and is bounded, on the side facing the axial portion 20 itself, by a truncated conical surface 37 with respect to the axis A, having diameters decreasing towards the shaped portion 21 of the support ring 16.

As visible in Figure 4, the sealing lip 30 has, in its own undeformed configuration and prior to assembly in the seal assembly 1, an overall axial length M, starting from the anchor portion 27, between 110% and 130% of the axial distance N between the radial portions 24 and 26 of the support rings 16, 17 in their assembly condition to form the seal assembly 1 itself.

The sealing lip 31 has, in its own undeformed configuration and prior to assembly in the sealing assembly 1, an overall radial length P, from the anchor portion 27, between 110% and 130% of the radial distance Q between the free end section of the radial portion 26 of the support ring 17 and the axial portion 20 of the support ring 16 in the assembly condition of the seal assembly 1 itself.

It must be specified that, in the calculation of the axial lengths M and radial lengths P of the sealing lips 30, 31 in undeformed conditions, the anchor portion sections 27 (of practically negligible size) from which said sealing lips 30, 31 extend directly and which are included between the sealing lips 30, 31 themselves and the respective adjacent sections of the support ring 16 are considered included in the calculated lengths.

Assembling by interference the sealing lips 30, 31 defines the elastic preload of the sealing lips 30, 31 in the static sealing configuration.

Finally, the gasket 18 comprises a further annular, truncated conical lip 38 of axis A, which has a conicity opposite to that of the sealing lip 31 and extends towards the axial portion 20 of the support ring 16 from the anchor portion 27.

The lip 38 extends axially from the opposite side of the sealing lip 31 with respect to the shaped portion 21 of the support ring 16.

The lip 38 delimits with the axial portion 20 of the support ring 16 an annular opening 40 having such a small size as to allow, in any condition, the passage of air while defining a stop for any particulate impurities.

In use, in the stop condition of the vehicle 6, i.e. when the motorized wheel 2 is stationary, both sealing lips 30, 31 are elastically loaded against the radial 26 and axial 25 portions of the support ring 16 in the sealing configuration.

Even at low speeds of the motorized wheel 2, in the case shown, lower than the value V, for example in the condition wherein the vehicle 6 travels at around 30 - 50 km/h, the sealing lips 30, 31 continue to cooperate in contact with the support ring 16 preventing the entry of any external contaminants into the compartment 15. In this case, the elastic load of the sealing lips 30, 31 on the support ring 16 progressively reduces as the speed increases due to the centrifugal effect; in fact, precisely because of the increasing speed, the sealing lips 30, 31 tend to move away from the radial 26 and axial 25 portions of the support ring 16 due to the centrifugal effect.

In this speed range of the motorized wheel 2, i.e. lower than the V value and typically used in fords, static water floods and/or off-road, the protection offered by the seal assembly 1 is therefore optimal.

As the speed of the motorized wheel increases beyond the predetermined value V, i.e., when the vehicle 6 is not presumably proceeding in fords, static water floods and/or off-road, both sealing lips 30, 31 detach from the radial 26 and axial 25 portions of the support ring 16 assuming the detaching configuration shown in Figure 5.

In such a condition, any particles of dust and/or mud and any splashes of water are already expelled by centrifugal effect from the rim of the motorized wheel 2.

After examining the characteristics of the seal assembly 1 according to the present invention, the advantages that it allows to obtain are evident.

In particular, the fact that the sealing lips 30, 31 ensure contact with the support ring 16 for speeds of the motorized wheel 2 higher than the value V, but detach from the support ring 16 itself for speeds higher than the aforesaid value V, makes it possible to obtain an excellent compromise between the protection of the electric motor 3 from external contaminants and the energy efficiency of the motorized wheel 1. In fact:
- at low speeds, i.e. at speeds wherein the vehicle 6 could potentially proceed through fords, flooded/muddy areas and/or off-road, there will be a greater elastic load of the sealing lips 30, 31 on the support ring 16 so as to ensure greater protection of the compartment 15 housing the electric motor 3; at such speeds, despite the high friction between the sealing lips 30, 31 and the support ring 16, the power dissipated would still be reduced precisely because of the low speed; and
- at high speeds, i.e. at speeds wherein the possible exposure to external contaminants is lower and any dust and/or mud particles are already expelled by centrifugal effect from the rim of the motorised wheel 2, there will be less protection but also the cancellation of the power dissipated by friction; furthermore, in such a condition, the separation between the sealing lips 30, 31 and the support ring 16 does not generate either wear or overheating and results not only in an optimisation of the energy efficiency of the motorized wheel 1 but also in a long service life of the seal assembly 1.

Finally, it is clear that changes and variations can be made to the described and shown seal assembly 1 without departing from the scope of protection of the claims.

## Claims

1. Use of a seal assembly (1) to prevent/limit the entry of external contaminants into a motor compartment (15) of a motorized wheel (2) for vehicles (6), in particular said motor compartment (15) being designed to house an electric motor (3), said sealing assembly (1) having a central axis (A) and comprising:
- a first support ring (16) made of a rigid material, fixable to a fixed stator part (7) of the motorized wheel (2);
- a second support ring (17) of rigid material, rotatable in use about said axis (A) with respect to the first support ring (16) and jointly with a rotor portion (8) of the motorized wheel (2) coupled to the stator portion (7); and
- an annular gasket (18) made of elastically deformable material, interposed between said first and second support rings (16, 17) and including an anchor portion (27), attached to said second support ring (17), and at least a first and a second annular sealing lip (30, 31), protruding cantilevered from said anchor portion (27);
wherein the first support ring (16) includes a first axial portion (20), extending parallel to said axis (A) and attachable to the stator portion (7) of the motorized wheel (2), and a first radial portion (24), extending radially with respect to said axis (A);
wherein the second support ring (17) comprises a second axial portion (25), extending parallel to said axis (A) in a position facing the first axial portion (20) and fixable to the rotor portion (8) of the motorized wheel (2), and a second radial portion (26), extending radially with respect to said axis (A) in a position facing the first radial portion (24);
wherein the second axial portion (25) of the second support ring (17) is placed radially outermost of the first axial portion (20) of the first support ring (16); and
wherein the anchor portion (27) of the gasket (18) is fixed to the second radial portion (26) of the second support ring (17);
**characterized in that** the first and second annular sealing lips (30, 31) are mounted by interference between the first and second support rings (16, 17) and define a sealing configuration, in which they cooperate with contact with the first radial portion (24) and with the first axial portion (20) of the first support ring (16), respectively, along respective annular contact lines (L) so as to be elastically preloaded, without the aid of external actions or external components, against the first support ring (16) itself; and
**in that** the first and second annular sealing lips (30, 31) are set by centrifugal effect in a detaching configuration from the first radial portion (24) and the first axial portion (20) of the first support ring (16), respectively, at speeds (2) of the motorized wheel greater than a predetermined non-zero value (V).

2. The use of the seal assembly according to claim 1, wherein the first and second radial portions (24, 26) are interposed between the first and second axial portions (20, 25).

3. The use of the seal assembly according to claim 1 or 2, wherein the first annular sealing lip (30) has an intermediate fold (32) between the anchor portion (27) of the gasket (18) and a free end (34) cooperating in contact in use with the first radial portion (24) of the first support ring (16) in the sealing configuration.

4. The use of the seal assembly according to claim 3, wherein the first annular sealing lip (30) comprises a base portion (35) extending between the anchor portion (27) of the seal (18) and said fold (32), and an oblique portion (36) extending between said fold (32) and said free end (34); and wherein said oblique portion (36) of said first annular sealing lip (30) forms an acute angle with the first radial portion (24) of said first support ring (16) on the side facing said first axial portion (20).

5. The use of the seal assembly according to claim 4, wherein said base portion (35) of said first annular sealing lip (30) has a substantially parallel course with said axis (A).

6. The use of the seal assembly according to any one of the preceding claims, wherein said first annular sealing lip (30) has a tapered section towards its free end (34).

7. The use of the seal assembly according to any one of the preceding claims, wherein the second annular sealing lip (31) extends from the anchor portion (27) of the gasket (18), at a position radially interposed between the first annular sealing lip (30) and the first axial portion (20) of the first support ring (16), and is bounded, on the side facing said first axial portion (20) of said first support ring (16), by a truncated conical surface (37) with respect to said axis (A), having diameters decreasing towards the first radial portion (24) of said first support ring (16).

8. The use of the seal assembly according to any one of the preceding claims, wherein the first annular sealing lip (30) has, in its own undeformed configuration and prior to assembly in the seal assembly (1), an overall axial length (M), starting from the anchor portion (27) of the gasket (18), between 110% and 130% of the axial distance (N) between said first and second radial portions (24, 26) of said first and second support rings (16, 17) in their assembly condition to form the seal assembly (1) itself.

9. The use of the seal assembly according to any one of the preceding claims, wherein the anchor portion (27) of the gasket (18) is attached to a free end portion of the second radial portion (26) of said second support ring (17).

10. The use of the seal assembly according to claim 9, wherein the second annular sealing lip (31) has, in its own undeformed configuration and prior to assembly in the seal assembly (1), an overall radial length (P) from the anchor portion (27) of the gasket (18), between 110% and 130% of the radial distance (Q) between the free end portion of the second radial portion (26) of the second support ring (17) and the first axial portion (20) of the first support ring (16) in the mounting condition of the seal assembly (1) itself.

11. The use of the seal assembly according to any one of claims 7 to 10, further comprising a third annular lip (38), having a truncated conical shape, presenting a conicity opposite to that of said second annular sealing lip (31) and extending towards said first axial portion (20) of the first support ring (16) from said anchor portion (27); said third annular lip 38 delimiting with said first axial portion (20) of the first support ring (16) an annular opening (40) having such a small size as to allow, in any condition, the passage of air while defining a stop for any particulate impurities.

## Patentansprüche

1. Verwendung einer Dichtungsanordnung (1) um ein Eindringen von äußeren Verunreinigungen in einen Motorraum (15) eines motorisierten Rades (2) für Fahrzeuge (6) zu verhindern oder zu begrenzen, wobei insbesondere der Motorraum (15) dafür ausgelegt ist, einen Elektromotor (3) aufzunehmen, wobei die Dichtungsanordnung (1) eine Mittelachse (A) aufweist und umfasst:
- einen ersten Stützring (16), der aus einem starren Material hergestellt ist und an einem festen Statorteil (7) des motorisierten Rades (2) befestigt werden kann;
- einen zweiten Stützring (17) aus starrem Material, der während der Nutzung um die Achse (A) in Bezug auf den ersten Stützring (16) und gemeinsam mit einem Rotorabschnitt (8) des motorisierten Rades (2), der mit dem Statorabschnitt (7) gekoppelt ist, drehbar ist; und
- ein ringförmiges Dichtungselement (18), das aus elastisch verformbarem Material hergestellt ist, zwischen dem ersten und dem zweiten Stützring (16, 17) angeordnet ist und einen Ankerabschnitt (27), der an dem zweiten Stützring (17) angebracht ist, und mindestens eine erste und eine zweite ringförmige Dichtlippe (30, 31), die freitragend von dem Ankerabschnitt (27) vorstehen, umfasst;
wobei der erste Stützring (16) einen ersten axialen Abschnitt (20) umfasst, der sich parallel zu der Achse (A) erstreckt und an dem Statorabschnitt (7) des motorisierten Rades (2) angebracht werden kann, sowie einen ersten radialen Abschnitt (24) umfasst, der sich radial in Bezug auf die Achse (A) erstreckt;
wobei der zweite Stützring (17) einen zweiten axialen Abschnitt (25) umfasst, der sich parallel zu der Achse (A) in einer Position erstreckt, die dem ersten axialen Abschnitt (20) zugewandt ist, und der an dem Rotorabschnitt (8) des motorisierten Rades (2) befestigt werden kann, sowie einen zweiten radialen Abschnitt (26) umfasst, der sich radial in Bezug auf die Achse (A) in einer Position erstreckt, die dem ersten radialen Abschnitt (24) zugewandt ist;
wobei der zweite axiale Abschnitt (25) des zweiten Stützrings (17) radial am weitesten außen von dem ersten axialen Abschnitt (20) des ersten Stützrings (16) platziert ist; und
wobei der Ankerabschnitt (27) des Dichtungselements (18) an dem zweiten radialen Abschnitt (26) des zweiten Stützrings (17) befestigt ist;
**dadurch gekennzeichnet, dass** die erste und die zweite ringförmige Dichtlippe (30, 31) mittels Presspassung zwischen dem ersten und dem zweiten Stützring (16, 17) montiert sind und eine Dichtungskonfiguration definieren, in der sie durch Kontakt mit dem ersten radialen Abschnitt (24) bzw. mit dem ersten axialen Abschnitt (20) des ersten Stützrings (16) entlang jeweiliger ringförmiger Kontaktlinien (L) so zusammenwirken, dass sie ohne Hilfe äußeren Zutuns oder äußerer Komponenten elastisch gegen den ersten Stützring (16) selbst vorgespannt werden; und
dadurch, dass die erste und die zweite ringförmige Dichtlippe (30, 31) durch Zentrifugalwirkung bei Geschwindigkeiten (2) des motorisierten Rades, die größer als ein zuvor festgelegter Wert (V) ungleich null sind, in eine sich von dem ersten radialen Abschnitt (24) bzw. dem ersten axialen Teil (20) des ersten Stützrings (16) lösende Konfiguration gebracht werden.

2. Verwendung der Dichtungsanordnung nach Anspruch 1, wobei der erste und der zweite radiale Abschnitt (24, 26) zwischen dem ersten und dem zweiten axialen Abschnitt (20, 25) angeordnet sind.

3. Verwendung der Dichtungsanordnung nach Anspruch 1 oder 2, wobei die erste ringförmige Dichtlippe (30) zwischen dem Ankerabschnitt (27) des Dichtungselements (18) und einem freien Ende (34), das während der Nutzung durch Kontakt mit dem ersten radialen Abschnitt (24) des ersten Stützrings (16) in der Dichtungskonfiguration zusammenwirkt, einen Zwischenfalz (32) aufweist.

4. Verwendung der Dichtungsanordnung nach Anspruch 3, wobei die erste ringförmige Dichtlippe (30) einen Basisabschnitt (35) umfasst, der sich zwischen dem Ankerabschnitt (27) der Dichtung (18) und dem Falz (32) erstreckt, sowie einen schrägen Abschnitt (36) umfasst, der sich zwischen dem Falz (32) und dem freien Ende (34) erstreckt; und wobei der schräge Abschnitt (36) der ersten ringförmigen Dichtlippe (30) einen spitzen Winkel mit dem ersten radialen Abschnitt (24) des ersten Stützrings (16) auf der dem ersten axialen Abschnitt (20) zugewandten Seite bildet.

5. Verwendung der Dichtungsanordnung nach Anspruch 4, wobei der Basisabschnitt (35) der ersten ringförmigen Dichtlippe (30) einen im Wesentlichen parallelen Verlauf zu der Achse (A) aufweist.

6. Verwendung der Dichtungsanordnung nach einem der vorangehenden Ansprüche, wobei die erste ringförmige Dichtlippe (30) in Richtung ihres freien Endes (34) einen verjüngten Querschnitt aufweist.

7. Verwendung der Dichtungsanordnung nach einem der vorangehenden Ansprüche, wobei sich die zweite ringförmige Dichtlippe (31) von dem Ankerabschnitt (27) des Dichtungselements (18) an einer Position, die radial zwischen der ersten ringförmigen Dichtlippe (30) und dem ersten axialen Abschnitt (20) des ersten Stützrings (16) liegt, erstreckt und auf der Seite, die dem ersten axialen Abschnitt (20) des ersten Stützrings (16) zugewandt ist, durch eine kegelstumpfförmige Fläche (37) in Bezug auf die Achse (A) begrenzt ist, deren Durchmesser in Richtung des ersten radialen Abschnitts (24) des ersten Stützrings (16) kleiner werden.

8. Verwendung der Dichtungsanordnung nach einem der vorangehenden Ansprüche, wobei die erste ringförmige Dichtlippe (30) - in ihrer eigenen unverformten Konfiguration und vor der Montage in der Dichtungsanordnung (1) - eine axiale Gesamtlänge (M), von dem Ankerabschnitt (27) des Dichtungselements (18) ausgehend, zwischen 110 % und 130 % der axialen Distanz (N) zwischen dem ersten und dem zweiten radialen Abschnitt (24, 26) des ersten und des zweiten Stützrings (16, 17) in ihrem montierten Zustand aufweist, um die Dichtungsanordnung (1) selbst zu bilden.

9. Verwendung der Dichtungsanordnung nach einem der vorangehenden Ansprüche, wobei der Ankerabschnitt (27) des Dichtungselements (18) an einem freien Endabschnitt des zweiten radialen Abschnitts (26) des zweiten Stützrings (17) angebracht ist.

10. Verwendung der Dichtungsanordnung nach Anspruch 9, wobei die zweite ringförmige Dichtlippe (31), in ihrer eigenen unverformten Konfiguration und vor der Montage in der Dichtungsanordnung (1), eine radiale Gesamtlänge (P), von dem Ankerabschnitt (27) des Dichtungselements (18) ausgehend, zwischen 110 % und 130 % der radialen Distanz (Q) zwischen dem freien Endabschnitt des zweiten radialen Abschnitts (26) des zweiten Stützrings (17) und dem ersten axialen Abschnitt (20) des ersten Stützrings (16) im montierten Zustand der Dichtungsanordnung (1) selbst aufweist.

11. Verwendung der Dichtungsanordnung nach einem der Ansprüche 7 bis 10, des Weiteren umfassend eine dritte ringförmige Lippe (38), die eine Kegelstumpfform aufweist, deren Konizität derjenigen der zweiten ringförmigen Dichtungslippe (31) entgegengesetzt ist, und die sich von dem Ankerabschnitt (27) in Richtung des ersten axialen Abschnitts (20) des ersten Stützrings (16) erstreckt; wobei die dritte ringförmige Lippe (38) mit dem ersten axialen Abschnitt (20) des ersten Stützrings (16) eine ringförmige Öffnung (40) begrenzt, die so klein ist, dass sie in jedem Zustand den Durchgang von Luft ermöglicht, während sie gleichzeitig das Eindringen partikelförmiger Verunreinigungen verhindert.

## Revendications

1. Utilisation d'un ensemble d'étanchéité (1) destiné à empêcher/limiter la pénétration de contaminants externes dans un compartiment moteur (15) d'une roue motorisée (2) pour des véhicules (6), en particulier ledit compartiment moteur (15) étant conçu pour loger un moteur électrique (3), ledit ensemble d'étanchéité (1) présentant un axe central (A) et comprenant :
- un premier anneau de support (16) constitué d'un matériau rigide, pouvant être fixé à une partie de stator fixe (7) de la roue motorisée (2) ;
- un second anneau de support (17) constitué d'un matériau rigide, pouvant tourner en utilisation autour dudit axe (A) par rapport au premier anneau de support (16) et conjointement avec une partie de rotor (8) de la roue motorisée (2) couplée à la partie de stator (7) ; et
- un joint annulaire (18) constitué d'un matériau élastiquement déformable, interposé entre lesdits premier et second anneaux de support (16, 17) et incluant une partie d'ancrage (27), fixée audit second anneau de support (17), et au moins des première et deuxième lèvres d'étanchéité annulaire (30, 31), faisant saillie en porte-à-faux depuis ladite partie d'ancrage (27) ;
dans laquelle le premier anneau de support (16) inclut une première partie axiale (20), s'étendant parallèlement audit axe (A) et pouvant être fixée à la partie de stator (7) de la roue motorisée (2), et une première partie radiale (24) s'étendant radialement par rapport audit axe (A) ;
dans laquelle le second anneau de support (17) comprend une seconde partie axiale (25), s'étendant parallèlement audit axe (A) en une position faisant face à la première partie axiale (20) et pouvant être fixée à la partie de rotor (8) de la roue motorisée (2), et une seconde partie radiale (26) s'étendant radialement par rapport audit axe (A) en une position faisant face à la première partie radiale (24) ;
dans laquelle la seconde partie axiale (25) du second anneau de support (17) est placée radialement le plus à l'extérieur de la première partie axiale (20) du premier anneau de support (16) ; et
dans laquelle la partie d'ancrage (27) du joint (18) est fixée à la seconde partie radiale (26) du second anneau de support (17) ;
**caractérisée en ce que** les première et deuxième lèvres d'étanchéité annulaires (30, 31) sont montées par interférence entre les premier et second anneaux de support (16, 17) et définissent une configuration d'étanchéité, dans laquelle elles coopèrent en contact respectivement avec la première partie radiale (24) et avec la première partie axiale (20) du premier anneau de support (16), le long de lignes (L) de contact annulaires respectives de manière à être élastiquement précontraintes, sans l'aide d'actions externes ou de composants externes, contre le premier anneau de support (16) proprement dit ; et
**en ce que** les première et deuxième lèvres d'étanchéité annulaires (30, 31) sont mises par effet centrifuge dans une configuration de détachement respectivement de la première partie radiale (24) et de la première partie axiale (20) du premier anneau de support (16), à des vitesses (2) de la roue motorisée supérieures à une valeur (V) non nulle prédéterminée.

2. Utilisation de l'ensemble d'étanchéité selon la revendication 1, dans laquelle les première et seconde parties radiales (24, 26) sont interposées entre les première et seconde parties axiales (20, 25).

3. Utilisation de l'ensemble d'étanchéité selon la revendication 1 ou 2, dans laquelle la première lèvre d'étanchéité annulaire (30) présente un pli intermédiaire (32) entre la partie d'ancrage (27) du joint (18) et une extrémité libre (34) coopérant en contact en utilisation avec la première partie radiale (24) du premier anneau de support (16) dans la configuration d'étanchéité.

4. Utilisation de l'ensemble d'étanchéité selon la revendication 3, dans laquelle la première lèvre d'étanchéité annulaire (30) comprend une partie de base (35) s'étendant entre la partie d'ancrage (27) du joint (18) et ledit pli (32), et une partie oblique (36) s'étendant entre ledit pli (32) et ladite extrémité libre (34) ; et dans laquelle ladite partie oblique (36) de ladite première lèvre d'étanchéité annulaire (30) forme un angle aigu avec la première partie radiale (24) dudit premier anneau de support (16) sur le côté faisant face à ladite première partie axiale (20).

5. Utilisation de l'ensemble d'étanchéité selon la revendication 4, dans laquelle ladite partie de base (35) de ladite première lèvre d'étanchéité annulaire (30) présente un parcours sensiblement parallèle audit axe (A).

6. Utilisation de l'ensemble d'étanchéité selon l'une quelconque des revendications précédentes, dans laquelle ladite première lèvre d'étanchéité annulaire (30) présente une coupe effilée vers son extrémité libre (34).

7. Utilisation de l'ensemble d'étanchéité selon l'une quelconque des revendications précédentes, dans laquelle la deuxième lèvre d'étanchéité annulaire (31) s'étend depuis la partie d'ancrage (27) du joint (18), en une position radialement interposée entre la première lèvre d'étanchéité annulaire (30) et la première partie axiale (20) du premier anneau de support (16), et est délimitée, sur le côté faisant face à ladite première partie axiale (20) dudit premier anneau de support (16), par une surface tronconique (37) par rapport audit axe (A), présentant des diamètres diminuant vers la première partie radiale (24) dudit premier anneau de support (16).

8. Utilisation de l'ensemble d'étanchéité selon l'une quelconque des revendications précédentes, dans laquelle la première lèvre d'étanchéité annulaire (30) présente, dans sa propre configuration non déformée et avant son assemblage dans l'ensemble d'étanchéité (1), une longueur axiale hors tout (M), à partir de la partie d'ancrage (27) du joint (18), entre 110 % et 130 % de la distance axiale (N) entre lesdites première et seconde parties radiales (24, 26) desdits premier et second anneaux de support (16, 17) dans leur état d'assemblage pour former l'ensemble d'étanchéité (1) proprement dit.

9. Utilisation de l'ensemble d'étanchéité selon l'une quelconque des revendications précédentes, dans laquelle la partie d'ancrage (27) du joint (18) est fixée à une partie d'extrémité libre de la seconde partie radiale (26) dudit second anneau de support (17).

10. Utilisation de l'ensemble d'étanchéité selon la revendication 9, dans laquelle la deuxième lèvre d'étanchéité annulaire (31) présente, dans sa propre configuration non déformée et avant son assemblage dans l'ensemble d'étanchéité (1), une longueur radiale hors tout (P) à partir de la partie d'ancrage (27) du joint (18), entre 110 % et 130 % de la distance radiale (Q) entre la partie d'extrémité libre de la seconde partie radiale (26) du second anneau de support (17) et la première partie axiale (20) du premier anneau de support (16) dans l'état de montage de l'ensemble d'étanchéité (1) proprement dit.

11. Utilisation de l'ensemble d'étanchéité selon l'une quelconque des revendications 7 à 10, comprenant en outre une troisième lèvre annulaire (38), présentant une forme tronconique, présentant une conicité opposée à celle de ladite deuxième lèvre d'étanchéité annulaire (31) et s'étendant vers ladite première partie axiale (20) du premier anneau de support (16) depuis ladite partie d'ancrage (27) ; ladite troisième lèvre annulaire (38) délimitant, avec ladite première partie axiale (20) du premier anneau de support (16), une ouverture annulaire (40) présentant une petite taille permettant, dans n'importe quel état, le passage de l'air tout en définissant une butée pour des impuretés particulaires.
